## Europäisches Patentamt
## European Patent Office
## Office européen des brevets

(11) Publication number: **0 117 736**
A2

(12) **EUROPEAN PATENT APPLICATION**

(21) Application number: **84301200.6**

(22) Date of filing: **24.02.84**

(51) Int. Cl.³: **B 29 C 25/00**, D 04 H 1/54

(30) Priority: **25.02.83 GB 8305309**

(43) Date of publication of application: **05.09.84**
**Bulletin 84/36**

(84) Designated Contracting States: **AT BE CH DE FR IT LI NL SE**

(71) Applicant: **RAYCHEM LIMITED, ROLLS HOUSE 7, Rolls Buildings Fetter Lane, London, EC4 1NL (GB)**

(72) Inventor: **Pithouse, Kenneth Brian, 3 Pinehurst cottage South Marston, Nr. Swindon Wiltshire (GB)**
Inventor: **Barker, David John, 52 Town End Road, Faringdon Oxon (GB)**
Inventor: **Harris, Richard James, 58 Saffron Close Wootton Bassett, Swindon Wiltshire (GB)**
Inventor: **Dixon, Paul, 10 Haven Close Stratton St. Margaret, Swindon Wiltshire (GB)**

(74) Representative: **Jay, Anthony William et al, Raychem Limited Intellectual Property Law Department Faraday Road, Dorcan Swindon Wiltshire (GB)**

(54) **Fabric member.**

(57) A curable fabric member comprising first and second uring reactants in elongate, preferably extruded, form. The reactants may be coextruded or sequentially extruded to form a single filament, or may be provided as separate staple fibres incorporated in a spun yarn, or as separate continuous filaments assembled into a multi-filament yarn.

EP 0 117 736 A2

0117736

This invention relates to a fabric member for use in a curable fabric, and to yarns and fabrics comprising such fabric members.

Curable fabrics are known, for example from U.S. Patent No. 4 271 329 which describes braids made of two kinds of monofilament, the two kinds being capable of curing by reacting together on heating under a recoverable sleeve to seal the sleeve to a substrate on which it is recovered; and from U.S. Patent No. 3 409 497, which describes a non-woven fabric (e.g. of alcohol-soluble nylon) to which is applied a thin solution of a viscous second component (e.g. an epoxy compound) capable of reacting with the fabric material on heating to effect curing and so form a rigid structural member, (e.g. for aircraft bodies).

The present invention provides a curable fabric member comprising at least two elongate melt-formed polymeric components capable of reacting together to effect curing.

It has been found advantageous to incorporate two melt-formed curable components in a single fabric member according the the present invention, and it has surprisingly been found possible to melt-form both components into the fabric member without unacceptable premature curing. The invention is especially advantageous when one of the two components is in itself too brittle or otherwise unsuitable for machine weaving to produce a curable fabric, in which case its combination with a relatively flexible co-reactant in a fabric member according to the present invention can enable it to be conveniently incorporated in woven curable fabrics.

It will be understood that references herein to "fabric members" are intended to include long monofilaments (length: diameter > 100:1) or staple fibres incorporating both of the reactive components, yarns comprising a mixture of separate monofilaments of each of the two reactive components, spun yarns of a mixture of separate staple fibres of each of the two reactive components, and yarns wherein some or all of the filaments or staple fibres are of the aforementioned kind incorporating both of the reactive components; and that "fabric members" refers to the two-component fabric members regardless of whether or not they are actually incorporated in a fabric. The elongate melt-formed components are preferably in a physical form having a length: average diameter ratio of at least 10:1, more preferably at least 30:1, most preferably at least 100:1. The term "diameter" does not imply limitation to any particular cross-sectional shape, the average diameter of square, triangular, or other cross-sectional shapes being readily determinable for this purpose.

"Melt-formed" is intended to include melt processing techniques such as extrusion, coextrusion, centrifugal spinning and other techniques whereby the polymer may be caused to flow into the required elongate form without dissolving it in solvents. The components may be sequentially melt-processed (e.g. extrude) to form a single filament fabric member, or may be simultaneously processed (e.g. coextruded) to form such a fabric member.

Preferably, the two components in the fabric member are in direct physical contact with each other, although binders and inert additives may be used if desired provided that they do not in practice interfere unacceptably with the curing reaction.

Staple fibres or long monofilaments containing only one or the other of the reactive components may be prepared by standard methods. Yarns, fibres or filaments incorporating both of the reactive components may be prepared by spinning together staple fibres of each component, twisting together monofilaments of each component, sequentially extruding or coextruding the two components into a single filament, or by other suitable procedures using known textile processing methods and equipment.

To form fibres or filaments containing both components, the components may be concentrically coated on a support or reinforcement filament, or may lie side-by-side along the fibre or filament, so that both components are exposed on its surface.

The curable fabric members, preferably when incorporated into a curable fabric, may be used as a reinforcing and/or sealing or adhesive layer between an electrical conductor and a dimensionally recoverable insulating sleeve to be recovered thereon. In this aspect, the invention accordingly provides a dimensionally recoverable article carrying on a surface thereof a curable fabric member comprising at least one elongate polymeric component and a second component capable of reacting with the first component to effect curing. Also provided is a method of enclosing at least part of a substrate, which comprises:

(a)    positioning thereon a dimensionally recoverable article such that at least one curable fabric member comprising at least one elongate polymeric component and a second component capable of reacting with the first component to effect curing, or a fabric comprising such curable fabric members, is disposed between the article and the substrate; and

(b)    recovering the article about the substrate and heating the fabric member(s) to fuse the said components, thus curing the fabric member(s).

In these forms of the invention, the curable fabric member may comprise a single elongate, preferably melt-formed, reactive component with the second component dispersed in it or coated on it, or may comprise the two elongate melt-formed components referred to above.

A dimensionally-recoverable article is an article the dimensional configuration of which may be made substantially to change when subjected to suitable treatment, preferred such articles being heat-recoverable.

Usually these articles recover, on heating, towards an original shape from which they have previously been deformed, but the term "heat-recoverable", as used herein, also includes an article which, on heating, adopts a new configuration, even if it has not been previously deformed.  References hereinafter to "unresolved recovery" mean the proportion of dimensional recovery actually achieved to the maximum possible, i.e. complete recovery towards original dimensions.

In their most common form, such articles comprise a heat-shrinkable sleeve made from a polymeric material exhibiting the property of elastic or plastic memory. The original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat-unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above a transition temperature thereof, for example, the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat to raise the temperature above the transition temperature will cause the article to assume its original heat-stable shape.

Where the term "recovery temperature" in connection with heat-recoverable articles is used herein, it is intended to refer to the transition temperature above which the article recovers even if some small degree of recovery is exhibited at temperatures slightly below the transition temperature.

In other known articles, an elastomeric member such as an outer tubular member is held in a stretched state by a second member, such as in inner tubular member, which, upon heating weakens and thus allows the elastomeric member to recover.

Articles of this type have, in recent years, become widely used in a number of applications, for example for protecting objects such as electrical cables and cable splices or metal pipes from corrosion or other damage, for example damage caused by penetration of moisture. For this reason many heat-recoverable articles are provided with a coat of adhesive or sealant.

One problem that is associated with the provision of adhesives on heat-recoverable articles is that, because the heat required to melt or otherwise activate the adhesive is usually supplied by heating the external surface of the heat-recoverable article, the temperature to which the adhesive is heated will be considerably lower than that of the external surface of the article due to the relatively poor thermal conductivity of the materials from which the heat-shrinkable article is formed. Thus, for example, where the heat-shrinkable article is formed from a cross-linked polyethylene, the external surface of the article may

0117736

be heated up to about 250°C in order to raise the adhesive temperature to only 100°C, and, in this case, no further heating of the article would be possible without damaging the article. Also, in many cases, the maximum temperature to which the adhesive can be raised is restricted by the type of substrate that is being covered. For example, where the substrate is a metal pipe, the thermal conductivity and size of the pipe cause it to act as a heat-sink and effectively limit the adhesive temperature and, where the substrate comprises an uncrosslinked polymer as is often the case with electrical cable jackets, the adhesive temperature often cannot be raised above about 100 to 120°C without damaging the cable jacket.

Whilst hot-melt adhesives or mastics can be used in a number of applications, the maximum temperature to which the article may be subjected after installation is usually limited to the melting or softening point of the adhesive.

It has unexpectedly been found that improved levels of cure are obtained when a heat-recoverable article is recovered over fabric members according to this invention, especially when, as is preferred, the fabric members are incorporated - (preferably woven) in a fabric and/or the melting point of at least one (preferably both) of the said components is selected to be not more than 50C°, preferably not more than 10C° above the recovery temperature of the article.

It will be understood that "curing" as used herein is not restricted to systems which form rigid chemical cross-links, provided that the components react together when suitably stimulated, e.g. by heating to produce a significant viscosity increase, an example being polyamide/EVA mixtures which produce such an increase by hydrogen bonding, as described in U.S. Patent 4018733.

The curable fabric may be made of two or more kinds of fabric member not all of which kinds need incorporate both curing components.

For example spun yarns containing one of the components and continuous filament yarns containing the other of the components could be combined with yarns containing equal weight of both of the components; or continuous filaments of one of the components could be combined with the last-mentioned yarns where an excess of one of the component over the other is desired.

The curable components of the adhesive composition may be selected according to requirements from known curable systems, provided that they can be melt-formed into fibres or filaments suitable for use as, or in, the fabric members of this invention. Curable materials which are difficult in themselves to handle in the form of fibres or filaments may be prepared in suitable physical form by means of a support member such as a central strengthening strand or filament, e.g. a 0.1mm glass or polyester filament, or polyester on which the curable material may be coated, e.g. by extrusion. Alternatively, brittle materials, e.g. epoxies, may be advantageously be formed into two-component fabric members in which the other component is a flexible material, e.g. a polyamide, so that the resulting two-component fabric member can be machine woven or knitted, despite the difficulty or impossibility of machine processing fabric members formed of the brittle material alone.

Preferably the components are such that, if they are brought together into intimate contact for example by dissolving them in a common solvent, they will react together even at room temperature to form a cured product so that curing of the adhesive composition on the article during storage is prevented substantially solely by the physical separation of the components.

In a number of cases it has been found that when a heat-recoverable article is recovered onto a substrate with fabric members according to the invention between the article and the substrate, the adhesive will cure sooner than if it is heated on its own to the same temperature, or will cure at a significantly lower temperature than it will when heated on its own. The fabric members may be carried by the recoverable article or may be applied separately to the substrate then overlaid with the recoverable article. Thus it has been found that it is possible, according to the invention, to provide an adhesive coated heat-recoverable article in which the adhesive can be cured by heating the article to its recovery temperature for periods in the range of the recovery time of the article, but which will also have good storage life.

The rate of curing of curable adhesives at elevated temperatures is linked to their rate of curing at

ambient temperatures, and hence their storage life, by the Arrhenius equation which effectively imposes a limit on the rate of cure of an adhesive at the usual recovery temperature of a heat-shrinkable article (about 100 to 120°C) for any given storage life at ambient temperatures or _vice_ _versa_. It can be shown from the Arrhenius equation that any curable adhesive that cures sufficiently rapidly at the recovery temperature of the article should suffer from a poor storage life or that an adhesive that does have a long storage life should not cure sufficiently rapidly at the recovery temperature of the article. However, according to the invention it is possible to overcome this problem by virtue of the synergistic increase in the rate of curing of certain adhesives when used in conjunction with a recoverable article.

This synergistic effect is most pronounced when the fusion temperature of the components is in the region of the recovery temperature of the article or the temperature to which the adhesive is heated when the article is recovered. Preferably the fusion temperature is not more than 50°, especially not more than 30° and most especially not more than 10°C above the recovery temperature of the article. Also preferably, not more than one, and especially none, of the components has a fusion temperature of less than 50°C. Each of the components preferably has a fusion temperature in the range of 70 to 120°C and most preferably from 70 to 100°C, and, instead or in addition, each has a fusion temperature that differs from the fusion temperature of the or each other reactive component by not more than 30°C.

In most instances the components will melt or soften at their fusion temperature although the term is intended to include sublimation of one or more components if this occurs.

In many cases the reactive components will soften and flow or otherwise fuse over a temperature range and the softening characteristics of the components may be observed by thermomechanical analysis (TMA) as described in "Thermal Analysis" by T. Daniels published by Kogan Page 1973. Accordingly, the fusion temperature or the melting point of the reactive components of the adhesive is defined herein as being the temperature at which the TMA probe has penetrated to 60% of the total thickness of the material, usually referred to as $T_{60}$. The TMA data described herein were obtained using a 6.35mm diameter flat profile probe loaded with a 50 gramme weight and by increasing the temperature of the material at a rate of 10°C per minute. Preferably the temperature at which reactive components of the adhesive initially become soft referred to as $T_i$ on the TMA plot) is not more than 30°C below and especially not more than 25°C below the melting point ($T_{60}$) of the components so that the difference between the maximum storage temperature and the minimum curing temperature can be reduced as far as possible.

Another synergistic effect that may be shown by the articles according to the invention, either instead of or in addition to the increase in rate of cure of the adhesive, is an increase in the level of curing of the adhesive as compared with the adhesive on its own. The increase in level of curing leads to improved properties such as solvent resistance and improved high temperature properties such as high temperature shear strength.

The level of cure of the adhesive may be measured in a number of ways. For example, it may be measured as an increase in the $T_{60}$ (as defined above) or, more preferably the $T_{80}$ of the adhesive, where $T_{80}$ is defined as the temperature at which the TMA probe has penetrated to 80% of the total thickness of the adhesive. In some cases the composition will cure sufficiently to prevent the probe penetrating it by 80% in which case the total depth of penetration is a better measure of cure. Another measure of the level of cure of the adhesive is its gel content which is measured by weighing a quantity of the adhesive into an extraction thimble, refluxing the adhesive for 5 to 8 hours with a solvent (e.g. 1,2-dichloroethane or tetrahydrofuran), drying the thimble in an oven for 24 hours to evaporate the solvent and, after leaving the dried thimble in the atmosphere for a further 24 hours reweighing the thimble. The gel content is then defined as the final weight of the adhesive (which is insoluble) expressed as a percentage of the initial weight of the adhesive.

The fabric members of this invention cure as stated above, by reaction of a plurality of mutually reactive components. The phrase "mutually reactive components" is defined herein as meaning components which, when mixed together in dry particulate form, will react together at the fusion temperature thereof or at least at the highest fusion temperature thereof to form a composition having a $T_{80}$ value that is at least 20°C, preferably at least 30°C and especially at least 40°C above the initial fusion temperature of the blend. Preferably the components will exhibit a gel content of at least 5%, more preferably at least 10%, especially at least 20%.

Thus, another aspect of the invention provides a method of enclosing at least part of a substrate, which comprises:

(a) positioning thereon a dimensionally-recoverable article such that at least one curable fabric member as described hereinbefore is disposed between the article and substrate; and

(b) recovering the article about the substrate and heating the fabric member(s) to fuse the said components.

There is essentially no limit on the size of the curable fabric members in that there can still be a synergistic increase in rate and/or level of cure even with very large fabric members, although the absolute value of the cure rate may tend to decrease with large fabric members. The thickness of the fabric members does, however, affect the maximum fabric web density which can be achieved with a single woven layer of the fabric and it may therefore be necessary to use more than one such layer of the fabric to achieve a desired minimum if very thin fabric members are used. Preferably the woven fabric members will have a diameter of

at least 0.2mm, for example 0.25 to 0.3mm, and more preferably at least 0.5mm, for example 0.75 to 0.8mm. It is to be understood that these references to diameter do not limit the fabric members to substantially circular cross-section, other cross-sections such as square, triangular, oval, hexagonal or indeterminate being perfectly acceptable provided they can be adequately used alone or when incorporated into a fabric.

The curable fabric members preferably consist solely of the reactive components although it may be desirable for them to include one or more inert carrier or reinforcing components, e.g. glass or polyester filaments, as aforesaid. Other inert components may be present in the curable fabric members, or may be mixed with them as a separate phase or both. For example, the curable fabric member may comprise curable resin such as an epoxy resin, preferably one based on bisphenol A or on epoxy novolak resin, as one component and a curing agent such as an amine, carboxylic acid, phenolic resin or isocyanate curing agent as the other.

If the curing agent is not polymeric, for example an organic peroxide or other free radical initiator, it will be necessary for it to be blended with a polymeric material, e.g. a polyester or a reactive or unreactive polyamide, before being melt-formed into the fabric member. The curable resin may, instead, comprise a polyamide having free amine groups, in which case the curing agent preferably comprises a material having free or blocked isocyanate functional groups, e.g. a cresyl blocked isocyanate.

The polyamides that are most suitable for forming the curable fabric members are those that are conventionally used as hot-melt adhesives. These polyamides are normally characterized by the fact that their amide linkages are separated by an average of at least fifteen carbon atoms and have amorphous structures in contrast with the more hightly crystalline, fibre forming polyamides such as nylon 6 or nylon 6.6. The polyamides have an amine number of at least 1, preferably of at least 5.

Chemical curing accelerators may also be present in the curable fabric members, or may be present as separate fabric members or particles, in a fabric incorporating the curable fabric members, provided that they do not unacceptably increase the rate of cure at storage temperatures, thus unacceptably decreasing the storage life of the curable fabric members.

Examples of accelerators include dimethylaminopyridine, tris (dimethylaminomethyl) phenol, tin octoate, imidazole or imidazole derivatives such as salts, substituted imidazoles or metal complexes thereof.

A number of non-curing adhesive components may be mixed with the curable fabric members to modify the overall adhesive composition, as long as they do not unacceptably affect the curing, and preferably do not affect the increase in rate or level of cure of the adhesive composition. Also it is preferred that they do not adversely affect the storage life of the adhesive.

Inert components that may be mixed with this curable fabric members for use as an adhesive composition include plasticisers such as phthalates or rosin esters, thermoplastic or thermosetting polymers, cured or uncured rubbers, inorganic materials to modify the properties of the uncured or cured adhesive such as reinforcing fillers, reinforcing fibres or microspheres, or tackifiers and the like. The other components, whether organic or inorganic, may be in any appropriate physical form, for example they may be in the form of powder, flake or fibres, and are preferably present in an amount of from 5 to 50 percent by weight based on the total weight of the composition. In a preferred aspect of the invention the adhesive composition contains one or more other components having a softening temperature range (from the initial softening temperature to $T_{60}$) that is greater than that of the reactive components so that the softening temperature range of the adhesive composition as a whole is greater than that of the reactive components, preferably by at least 5°C. This has the advantage that, whilst the adhesive will cure when heated to only a relatively low temperature above the maximum storage temperature, it will possess cohesive and adhesive strength over a significantly greater temperature range. Alternatively, in some cases where the reactive components have a large softening temperature range it may be desirable to reduce the softening temperature range of the adhesive composition by incorporation of the appropriate components for example tackifier resins such as hydrogenated rosin esters and terpene phenols or polar waxes such as polyamide and polyester waxes.

As examples of other components that may be incorporated in the adhesive compositions, there may be mentioned tacky materials such as pressure sensitive adhesives or mastics, or thermoplastic materials. The components are preferably, although not necessarily, fluid at temperatures below the melting point of the reactive components, but if they are not they should be such as to allow the reactive components to mix together at the recovery temperature of the article.

The fabric members according to the invention and fabrics comprising them may be carried on recoverable articles in a number of configurations depending on the particular use. The articles may be in the form of a tube that has been extruded and expanded radially to render it heat-recoverable, the tube being either in continuous lengths or discrete pieces and carrying on its internal surface the fabric adhesive compositions. Alternatively, the articles may be in the form of a sheet or tape that can be wrapped or wound around an object. More complex shapes, commonly referred to as boots, transitions, udders or caps, may be formed by moulding the articles in the desired configuration and then expanding them or by the methods described in our U.K. Published Patent Applications Nos. 2083403A and 2083859A. The fabric members of the present invention are also suitable for the use on wrap-around devices. So called wrap-around devices are employed for sealing, insulating or otherwise protecting a substrate where the use of a preformed tubular article such as a sleeve is not possible or convenient e.g. in the case where the end of an elongate substrate is not accessible. In general, such wrap-around articles comprise at least a

portion thereof which is adapted to be wrapped around a substrate to be covered and secured in tubular form by closure means. Thereafter, the wrap-around closure may be heat-recovered tightly onto the substrate by application of heat. Examples of wrap-around devices are known and one form of wrap-around device in which the curable fabric members may be especially useful is that described in our U.K. Published Patent Application No. 2076694A, which comprises a layer of sealant that may be peeled away at any desired point to expose an underlying layer of a closure adhesive. The fabric members of the present invention can be well adapted to such a peeling operation.

In hollow articles, either moulded as such or formed by wrapping, the fabric adhesive may be advantageously arranged as a ring on the inner surface at or near an aperture in the article to seal the aperture to a substrate about which the article is to be recovered in use.

Another preferred article which may carry the fabric members according to the invention is in the form of a continuous tape or sheet, one surface of which carries the fabric members. Such an article may be wound helically around a substrate for example a metal pipe which is preferably pre-heated, and the wound portions of the tape or sheet may be heated to recover the tape or sheet and cure the fabric members. Often it is desired to operate further on the pipe shortly after the protective article has been recovered thereon, for example to bury it in a pre-dug trench and, because of the rapid cure of the adhesive composition, it is possible to perform such operations only a few minutes after the tape or sheet according to the invention has been recovered thereon.

The curable fabric members may be attached to the heat-recoverable article in a number of ways depending on the type of article and the arrangement of the fabric members. For example, where the article has an open, generally uniform configuration, it may be provided with a layer of tacky material for example pressure sensitive adhesive layer e.g. by spraying or in the form of a tape, and the curable fabric members preferably arranged in the form of a fabric may be applied thereto by application of pressure, pressures in the order of 0.8 MPa (120 p.s.i.) and temperatures of about 15 to 30°C having been found suitable in practice. Other methods such as welding or sewing may also be used to attach the fabric members.

In another method of applying the fabric members, the fabric members are mixed or coated with other components which preferably comprise or include a pressure-sensitive adhesive or a mastic and the whole composition is pressed onto the heat-recoverable article, the temperatures and pressures used preferably being the same as those mentioned above.

Curable fabrics can be made solely of the curable fabric members as described above or can contain other fabric members in addition to the curable members. The fabric can be knitted, woven, non-woven, braided, or the like. In non-woven fabrics, additional fibres of the reactive components may be spun separately then blended or layered with the curable fabric members of this invention, to form the fabric. In a preferred embodiment the fabric is a woven fabric. The woven fabric can contain only the curable fabric members or it can contain the curable members together with non-curable fibres or filaments. For example, the fabric can contain curable fibres in one direction and non-curable strength fibres in the other. This produces a curable fabric which is especially strong in one direction. The fabric can be woven in a pattern, for example, twill, satin, sateen, Leno, plain, hop sack, sack, matt and various weave combinations in single or multiple ply weaves e.g. 2 - or 3 - ply weaves. The ratio of the reactive components is preferably stoichiometric 1:1, but may vary within the range from 1:9 to 9:1 to suit particular requirements of materials and level of cure. The fabric may alternatively be knitted if desired, either by warp knitting or weft knitting.

The adhesive components respectively may be arranged one on the weft and one in the warp, or various mixtures of components in the weft and/or warp may be used. According to yet another aspect, the The fabric members of this invention may comprise three or more reactive components if desired, in concentric or other arrangements as may be convenient for particular purposes.

The adhesive components used in the fabric members according to the invention have a softening point that increases on application from the melting or softening points of the components, e.g. in the order of 90 to 95°C to a value of about 130 to 140°C or even higher and so combine low initial application temperatures

0117736

with relatively high use temperatures. Furthermore, whilst the cured fabric members exhibit relatively high bond strengths when subject to shear stresses it also exhibits surprisingly high bond strengths at high temperatures in the peel mode, e.g. in the order of 80 to 100 $N(25mm)^{-1}$ between polyethylene substrates in contrast with conventional epoxy adhesives which have extremely low peel strengths.

Specific examples of the present invention will now be described by way of illustration.

Example 1

0.01 mm diameter polyester yarn was coated with a concentric layer of Shell Epicote 1001 epoxy by passing it through a pre-centred wire coating die mounted on to a 1" bore extruded to a diameter of 0.35 mm.

This filament was then twisted, by hand, at the rate of 3 twists per cm, with a 0.1 mm diameter polyester yarn coated, by the same method to the same overall diameter, with Henkel Macromelt T 6071 polyamide.

The following cure conditions were obtained

|  | Gel |
| --- | --- |
| Twisted Yarn at manufacture. (uncured) | 0% |
| Yarn heated to 150°C for 15 mins. | 33% |

Gel

Yarn woven into a fabric
density 200 g/m$^2$ and
cured 15 min at 150°C under 48%
a H.S. article at 50%
unresolved recovery.

Example 2

A glass fibre 0.1 mm diameter was coated with a layer of epoxy (Shell Epicote 1001) by the method described in Example 1 to a diameter of 0.3 mm. The fibre was cooled to ambient temprature before being coated with polyamide (Henkel Macromelt 6301) to an overall diameter of 0.6 mm by passing it through a similar die as previously described.

The following cure results were obtained.

| | |
|---|---|
| Initial (Uncured) | 8% Gel |
| Heated to 150°C for 15 minutes | 30% Gel |
| Under sleeve at 50% unresolved recovery at 150°C 15 minutes | 47% Gel |

### Example 3

A polyester yarn 0.1 mm diameter was drawn through a bath of molten epoxy (Epicote 1001) which was mounted on the back of a Wire Coating Cross head die. The fibre which picked up a coating of the epoxy was drawn through the centre pin of the die, which acted as a sizing die and reduced the epoxy coating to give a total diameter of 0.3 mm. A layer of polyamide, Macromelt 6301 was then concentrically extruded over it.

This fibre produced the following % Gels on Cure.

Initial                                         3.5%
(Uncured)

Heated to 150°C                                 22%
15 minutes

Under heat-shrink sleeve at 50%                 52%
unresolved recovery
15 minutes at 150°C

### Example 4

A concentric coextrusion of polyamide (Macromelt 6301) and epoxy (Epicote 1001) was produced by extruding the epoxy down the hollow centre pin of a pre-centred wire coating cross head die. The polyamide was extruded over the epoxy as it left the pin to an overall diameter of 0.9 mm. The epoxy/polyamide ratio was measured at 15/85. The initial Gel% obtained from this fibre was 5.6%.

0117736

Example 5

A polyamide Macromelt 6301, filament extruded at a die heat temperature of 120°C was passed directly, without forced cooling, into a fluidised bath of epoxy powder, Epicote 1001. The bed was 6" from the die exit and 12" deep. The mean size of the powder particles was 300 microns. Epoxy powder adhered to the hot polyamide so that the ratio of epoxy/polyamide was 20/80.

The following % Gels were obtained from this fibre.

| | |
|---|---|
| Initial (Uncured) | 5% |
| Heated to 150% 15 minutes | 8% |
| Under heat-shrink sleeve 50% unresolved recovery 15 minutes at 150% | 21.3% |

CLAIMS:


1.    A curable fabric member comprising at least two elongate melt-formed polymeric components capable of reacting together to effect curing.


2.    A member according to claim 1 wherein the said two components are in a physical form having a length: average diameter ratio of at least 10:1, preferably at least 30:1.


3.    A member according to claim 1 or 2, wherein the said two components are in direct physical contact with each other.


4.    A member according to claim 3, in the form of a spun yarn comprising separate staple fibres of each of the said two components.


5.    A member according to claim 3 in the form of a continuous filament yarn comprising separate continuous filaments of each of the said two components.


6.    A member according to claim 3, wherein the said two components have been coextruded.


7.    A member according to claim 3, wherein the said two components have been sequentially extruded to form a single filament.


8.    A member according to claim 6 or 7 in the form of a long monofilament.

9.     A member according to claim 6 or 7 in the form of a staple fibre.

10.    A member according to claim 8 incorporated in a continuous filament yarn.

11.    A member according to claim 9 incorporated in a spun yarn.

12.    A member according to any of the preceding claims which is heat curable.

13.    A member as claimed in any one of claims 1 to 12, wherein one of the reactive components comprises an epoxy resin and the other reactive component comprises a thermoplastic polyamide resin having free amine groups.

14.    A member as claimed in any of the preceding claims, wherein each of the reactive components has a fusion temperature in the range of from 70 to 120°C.

15.    A curable fabric comprising fabric members according to any of the preceding claims.

16.    A dimensionally recoverable article carrying on a surface thereof a curable fabric member comprising at least one elongate polymeric component and a second component capable of reacting with the first component to effect curing.

17.    An article according to claim 16 wherein the fabric member is as claimed in any of claims 1 to 14.

18.    ·An article according to claim 16 or 17 wherein the fabric member is incorporated in a curable fabric carried by the article.

19.    An article according to claim 16, 17 or 18 which is heat-recoverable.

20.    An article as claimed in claim 19, wherein each of the reactive components has a fusion temperature that is not more than 50°C above the recovery temperature of the article.

21.    A method of enclosing at least part of a substrate, which comprises:

(a)    positioning thereon a dimensionally recoverable article such that at least one curable fabric member comprising at least one elongate polymeric component and a second component capable of reacting with the first component to effect curing, or a fabric comprising such curable fabric members, is disposed between the article and the substrate; and

(b)    recovering the article about the substrate and heating the fabric member(s) to fuse the said components, thus curing the fabric member(s).

22.    A method according to claim 21, wherein the fabric member(s) is or are as claimed in any of claims 1 to 14.